# FASCICULE DE BREVET EUROPEEN

(11) **EP 2 300 317 B1**
(45) Date de publication et mention de la délivrance du brevet: **09.11.2011**
(21) Numéro de dépôt: 09797512.2
(22) Date de dépôt: 16.07.2009
(51) Int. Cl.: B64C 11/06

(54) **DISPOSITIF D'ATTACHE D'UNE PALE A CALAGE VARIABLE**
VORRICHTUNG ZUM BEFESTIGEN EINES BLATTS MIT VARIABLER EINSTELLUNG
DEVICE FOR ATTACHING A BLADE WITH VARIABLE PITCH

(30) Priorité: 18.07.2008 FR 0854912
(43) Date de publication de la demande: 30.03.2011
(73) Titulaire: Snecma, 75015 Paris (FR)
(72) Inventeur: DAO, Daniel, F-77176 Savigny Le Temple (FR); FABRE, Adrien, Jacques, Philippe, F-75014 Paris (FR); MADEC, Alain, Paul, F-77590 Chartrettes (FR)
(74) Mandataire: Ilgart, Jean-Christophe
(86) Numéro de dépôt international: PCT/EP2009/059194
(87) Numéro de publication internationale: WO 2010/007146

(56) Documents cités:
- US-A- 5 263 898

## Description

Le sujet de l'invention est un dispositif d'attache d'une pale à calage variable.

De nombreuses pales d'hélice ont un calage variable pour optimiser leur fonctionnement. La pale est alors prolongée par un pivot tournant dans un logement du moyeu de l'hélice ou, plus généralement, d'une pièce de support. La pale et le pivot sont souvent des pièces séparées, la pale étant construite en matériau composite afin de gagner du poids, le pivot restant métallique pour résister aux efforts auxquels il est soumis. Dans un certain nombre de conceptions, le pivot est alors encastré dans la pale, qui a été moulée par-dessus lui, et les deux pièces sont donc indissociables. Cela donne satisfaction sous certains aspects mais comporte les inconvénients d'une fabrication plus compliquée et d'une pale plus épaisse puisqu'elle doit envelopper le pivot ; et on n'obtient pas de bonne continuité entre le bas de la pale et la pièce de support dans laquelle est logé le pivot, ce qui fait apparaître des pertes aérodynamiques. D'autres conceptions consistent à construire séparément la pale et le pivot, et à les maintenir ensemble par une queue d'aronde.

Une telle conception connue est illustrée aux figures 1 et 2 (ou par le brevet US-A-5 263 898). Un moyeu 1 d'hélice comporte un logement circulaire dans lequel est logé un pivot 2 de mise en rotation d'une pale 3. Une rainure 4 à section à queue d'aronde et un pied 5 de section correspondante de la pale 3 apparaissent. Le tourillonnement est permis par des paliers de roulement 6 et des paliers de butée 7 entre le moyeu 1 et le pivot 2. Le pied 5 de la pale 3 est retenu dans la rainure 4 d'un côté par une cale 8 insérée dans la rainure 4 et de l'autre côté par une cale 11 maintenue par des boulons 12 s'étendant dans le pivot 2 parallèlement à la rainure 4 et de part et d'autre d'elle. Les boulons 12 servent également à plaquer la cale 11 contre un ressort 61 positionné dans la rainure 4 sous le pied 5 et dont la fonction est de maintenir la pale 3 radialement lorsque la force centrifuge n'est pas suffisante pour maintenir en contact le pied 3 avec la rainure 4, à l'arrêt notamment. Le ressort 61 est légèrement incurvé au repos et l'appui de la cale 11 vient lui imposer une courbure de déformation qui assure la retenue de la pale 3. Une couronne 60 dentée est maintenue autour du pivot 2 principalement par un secteur de verrouillage 13 qui ferme la couronne à laquelle il est vissé, et qui est aussi retenu par les boulons 12 en soutenant la cale 11 par derrière. Dans cette conception, Le pivot 2 peut être pourvu facilement d'une plate-forme 14 supérieure circulaire, débordant en direction radiale des portions principales du pivot et dont la fonction est de rétablir la continuité de la paroi de la veine.

Cette conception présente toutefois l'inconvénient de nécessiter un grand nombre de pièces pour retenir la pale dans la rainure. Un objet de l'invention est de proposer un perfectionnement et de faciliter ainsi l'attache de la pale, son démontage ou son remplacement, tout en permettant un gain de poids.

Dans une définition générale, l'invention concerne un dispositif de pale à calage variable, comprenant une pale, un pivot dans une rainure supérieure duquel un pied de la pale est monté, et des moyens de retenue du pied de la pale dans la rainure, **caractérisé en ce que** lesdits moyens comprennent des cales engagées dans la rainure et butant contre le pied de la pale, et une virole enfilée autour du pivot et munie de points d'attache au pivot, et de taquets opposés de clôture de la rainure.

C'est la virole qui constitue l'élément essentiel de l'invention : il suffit de l'enfiler autour du pivot et de la fixer à lui pour qu'elle bouche les extrémités de la rainure et interdise les déplacements de la pale dans les deux sens, en liaison avec les cales de serrage, qui sont placées dans la rainure sans avoir besoin d'y être fixées. Dans la conception antérieure, la couronne est discontinue et interrompue devant la rainure, et le secteur de verrouillage doit lui être assemblé pour refermer la rainure ; et elle ne participe pas au maintien de la pale de l'autre côté non plus, étant séparée de la cale 11 : elle n'a aucun des taquets de la virole de l'invention.

La virole peut avoir une forme approximativement circulaire mais pourvue d'un méplat sur lequel un des taquets est installé.

Les cales peuvent comprendre une cale de retenue de glissement du poids de la pale dans la rainure, et une cale de support du pied de la pale posée sur un fond de la rainure, ce qui est une disposition particulièrement simple pour arrêter complémenter les mouvements du pied de pale dans la rainure.

Ces aspects de l'invention ainsi que d'autres seront maintenant décrits plus en détail au moyen des figures suivantes :

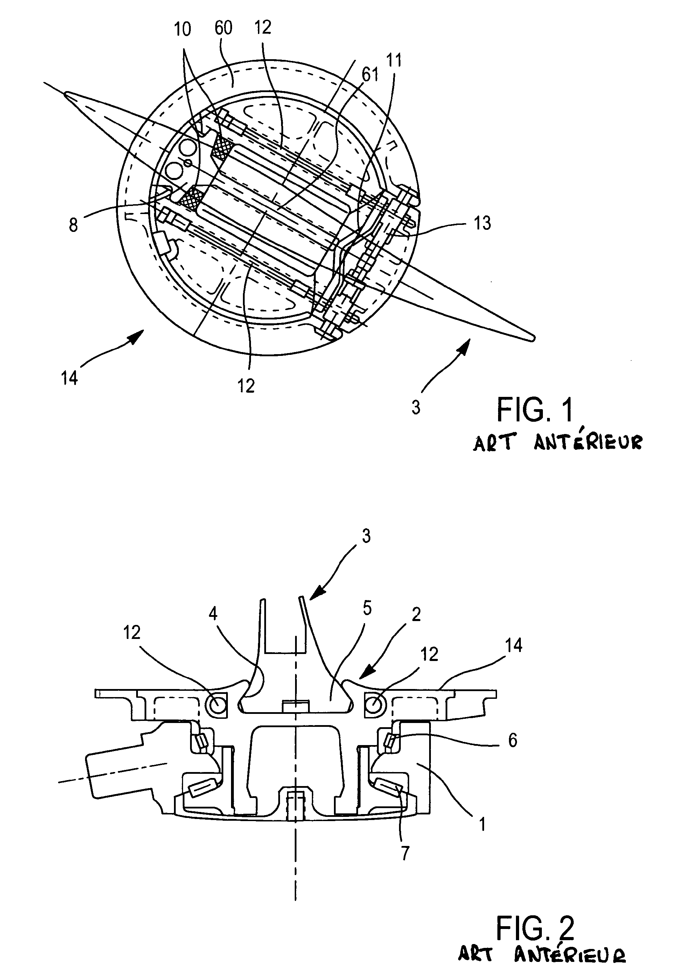

- les figures 1 et 2 déjà décrites représentent, en vue de dessus et en vue de coupe diamétrale, un dispositif d'attache de pale de l'art antérieur ;
- et les autres figures 3 à 10 illustrent l'invention ; la figure 3 illustrant le pivot isolé, la figure 4 le montage du pied de la pale et de la virole sur le joint à un état avant l'assemblage, la figure 5 l'état assemblé de ces pièces, la figure 6 une cale de verrouillage, la figure 7 l'assemblage des cales, la figure 8 des demi-plates-formes couvrant le joint, la figure 9 l'assemblage avec les demi-plates-formes et la figure 10 la virole isolée.

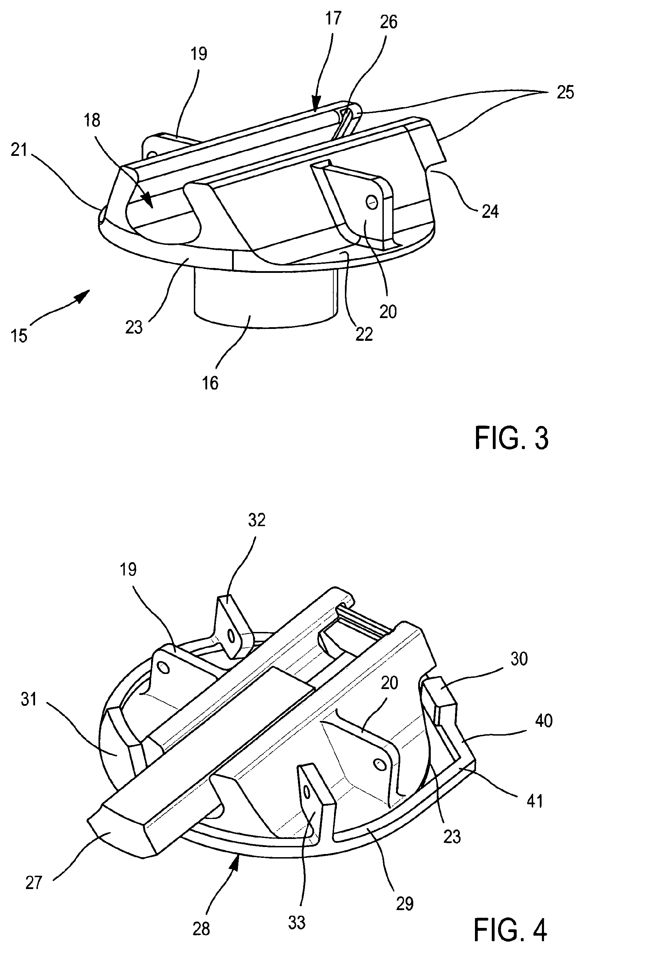

Le pivot apparaît isolé à la figure 3 ; il porte la référence 15 et comprend une partie principale 16 (seulement schématisée, puisque l'invention ne porte pas sur elle), et une partie supérieure 17 par laquelle la pale est attachée et qui comprend la rainure 18. De plus, deux pattes 19 et 20 opposées et en prolongement se dressent de part et d'autre de la rainure 18, sur des plateaux latéraux 21 et 22. Le contour de la plus grande partie de la partie supérieure 17 est circulaire et forme une collerette 23. Une saignée 24 est toutefois établie d'un côté de la rainure 18, dont les parties supérieures des lèvres qui la délimitent forment des surplombs 25 ; les surplombs 25 sont eux-mêmes creusés d'entailles 26 à leurs bords intérieurs et qui sont en face l'une de l'autre, en étant ainsi disposées au-delà du fond de la rainure 18.

Deux autres éléments de l'assemblage apparaissent à la figure 4, à laquelle on se reporte à présent. Le pied d'une pale 27 est enfilé dans la rainure 18, et une virole 28 est engagée autour de la collerette 23. La pale 27 (elle aussi représentée partiellement) et son pied sont classiques. La virole 28 comprend une cerce 29 continue en direction angulaire du pivot 15 et à peu près circulaire, deux taquets 30 et 31 fixés à la cerce 29 à des positions diamétralement opposées de celle-ci et deux pattes d'attache 32 et 33 de même fixées à la cerce 29 à des positions diamétralement opposées entre elles, mais perpendiculaires à celles des taquets 30 et 31. Les taquets 30 et 31 ainsi les pattes d'attache 32 et 33 s'élèvent au-dessus de la cerce 29, et les pattes 32 et 33 font saillie radialement vers l'intérieur, alors que les taquets 30 et 31 ne le font pas.

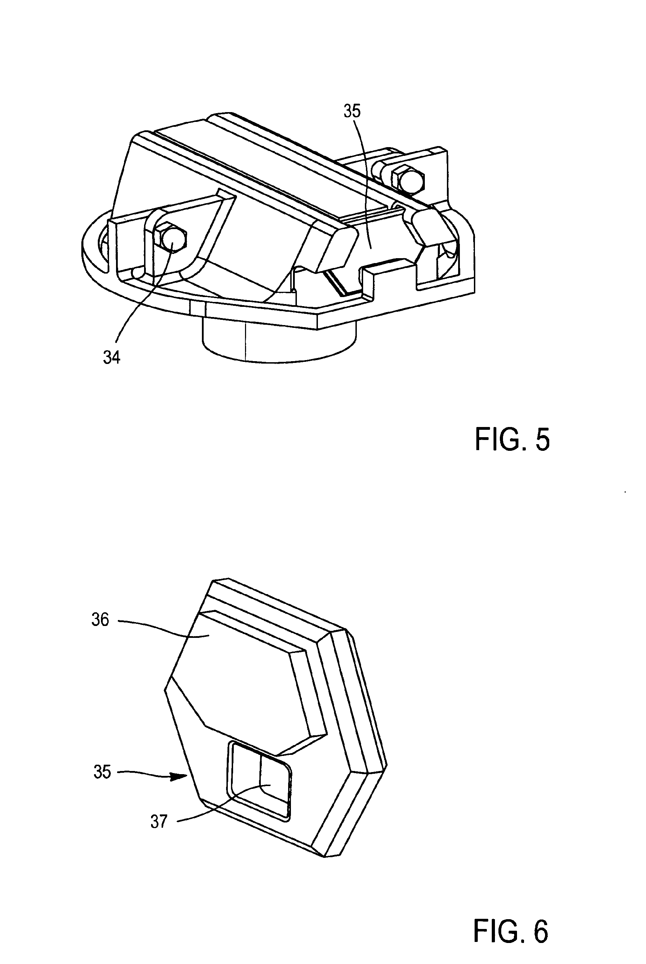

La virole 28 peut tourner autour du pivot 15, la cerce 29 glissant sur la collerette 23. Comme les pattes 19 et 20 du pivot 15 s'étendent perpendiculairement à la rainure 18, l'état que voici peut être obtenu. Une rotation appropriée de la virole 28 plaque les pattes 32, 33 respectivement sur des faces d'appui des pattes 19 et 20 du pivot 15, tandis que les taquets 30 et 31 se dressent devant les extrémités de la rainure 18 pour les obturer. La sortie de la pale 27 hors de la rainure 18 est alors empêchée. Les pattes 19, 20, 32 et 33 sont munies de perçages qui viennent en prolongement quand elles sont posées l'une sur l'autre, ce qui permet de fixer la virole 28 au pivot 15 par des boulons 34, ce qu'on a représenté à la figure 5. On voit que ce système d'assemblage est beaucoup plus simple que celui des figures 1 et 2. D'autres particularités de la réalisation vont maintenant être décrites.

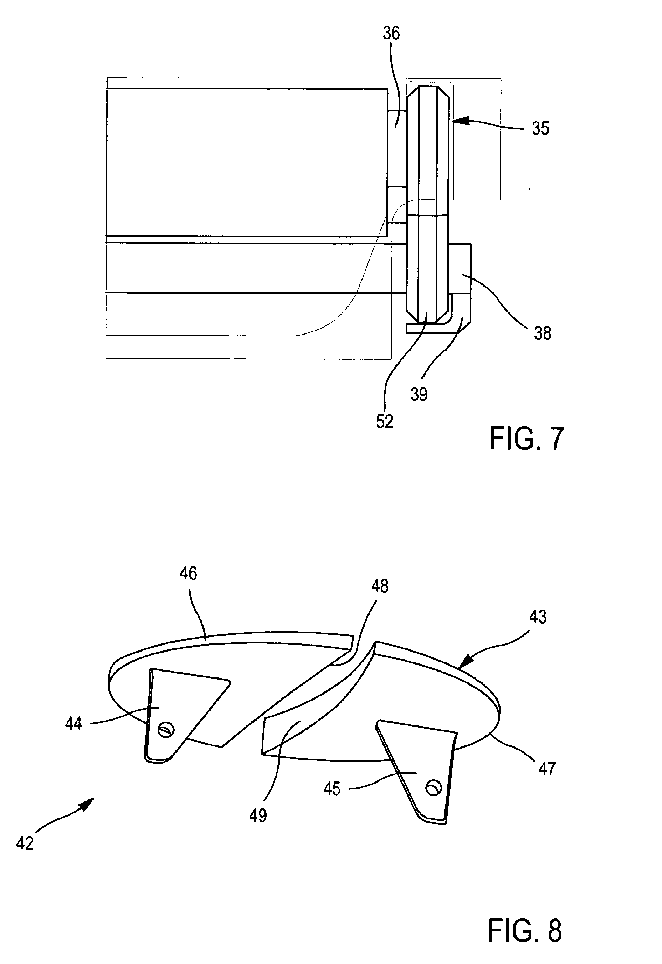

Deux cales sont adjointes au dispositif pour maintenir la pale 27 dans la rainure 18 du pivot 15 à une position déterminée. Elles sont illustrées aux figures 6 et 7. L'une est une cale de verrouillage 35 destinée à retenir le pied de la pale 27 contre les glissements dans la rainure 18. Elle est de forme générale plane à section polygonale, et elle est introduite dans les entailles 26. Elle comprend une face d'appui 36 du pied de la pale 27 à une partie supérieure, et un perçage 37 à une partie inférieure. Cette cale de verrouillage 35 est constituée d'une partie en matériau rigide (métallique ou composite) et d'une partie en matériau déformable (à la face d'appui 36 par exemple), ce qui permet à la cale de verrouillage 35 d'absorber de l'énergie lors d'un impact d'un corps étranger sur la pale 27 et donc de diminuer les efforts qui s'appliquent sur le pied de la pale 27. Le perçage 37 est destiné à recevoir la deuxième cale, qui est une cale de support 38 du pied de la pale 27 posée au fond de la rainure 18. Sa forme est celle d'une baguette plate. Son extrémité travers le perçage 37, et elle comprend un crochet 39 courbé vers le bas et vers le pivot 15, qui s'étend sous la cale de verrouillage 35 en entourant ainsi une languette 52. Les cales 35 et 38 sont des pièces libres, dépourvues de moyens d'assemblage tels que des vis à d'autres pièces et qui sont seulement retenues par des blocages, ce qui concourt à la simplicité recherchée de la conception.

Revenant aux figures 4 et 5, on remarque que les taquets 30 et 31 ont des tailles inégales, et que la cerce 29 possède une augmentation de son rayon à l'emplacement du taquet 30 le plus petit, où elle est conformée en un méplat 40 au bout de portions rectilignes de prolongement 41. Ces dispositions permettent de conclure le montage. La virole 28 est enfilée sur la collerette 23 dans la position angulaire de la figure 5, correspondant au montage, en l'absence de la pale 27 et des cales 35 et 38. Le méplat 40 s'étend juste au-delà des saillies 25 grâce aux portions rectilignes 41, ce qui rend possible cette opération d'enfilage. La virole 28 est ensuite tournée légèrement pour la placer dans la position de la figure 4, où les accès à la rainure 18 sont dégagés. La cale de verrouillage 35 est glissée par le dessous dans les entailles 26, la cale de support 38 est enfilée dans le perçage 37, puis le pied de la pale 27 est introduit dans la rainure 18 en glissant sur la cale de verrouillage 35 jusqu'à buter contre la cale de verrouillage 35. Une rotation inverse de la virole 28 place le taquet 30 de petite taille juste devant l'extrémité de la cale de verrouillage 38, le taquet 31 de grande taille devant l'ouverture opposée de la rainure 18. Le pied de la pale 27 est alors retenu dans la rainure 18 avec peu de jeu entre le taquet 31 et la cale de verrouillage 35 qui sont à des positions fixes, et peu de jeu aussi dans la direction de l'axe du pivot puisque la cale de support 38 le maintient contre le sommet de la rainure 18. La cale de support 38 empêche la cale de verrouillage 35 de choir, et le taquet 30, en appui sur la cale de support 38, interdit son extraction hors de la rainure 18 même s'il occupe seulement une petite partie de la section de la rainure 18.

Le dispositif comprend encore deux demi-plates-formes 42 et 43 sensiblement semi-circulaires et équipées chacune d'une patte 44, 45 inférieure. Elles sont représentées à la figure 8. Le montage du dispositif s'achève en installant des faces d'appui des pattes 44 et 45 sur les pattes 19 et 20 respectivement, avant d'installer les boulons 34, les pattes 44 et 45 étant elles aussi munies de perçages venant dans le prolongement des précédents. Les demi-plates-formes 42 et 43 sont analogues avec en particulier des bords extérieurs circulaires 46 et 47 appartenant à un même cercle à l'état monté, mais des bords intérieurs 48 et 49 différents, afin qu'ils s'ajustent respectivement aux côtés d'intrados et d'extrados de la pale 27. Il est ainsi possible de maintenir la continuité de la veine d'écoulement des gaz autour de la pale 27. Cela explique aussi que les demi-plates-formes 42 et 43 soient légèrement incurvées et que leur épaisseur ne soit pas uniforme.

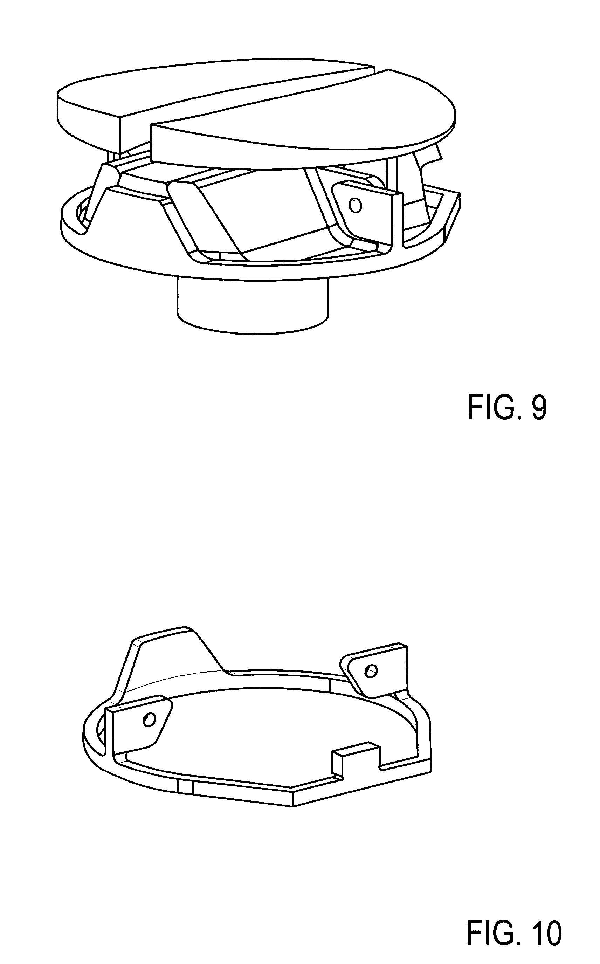

Le dispositif complètement assemblé est représenté à la figure 9. La virole isolée l'est à la figure 10.

## Revendications

1. Dispositif de pale à calage variable, comprenant une pale (27), un pivot (15) dans une rainure (18) duquel un pied de la pale est monté, et des moyens de retenue du pied de la pale dans la rainure, lesdits moyens comprennant des cales (34, 38) engagées dans la rainure et butant contre le pied de la pale, et une virole (28) enfilée autour du pivot (15) **caractérisé en ce que** la virole (28) est munie de points d'attache (32, 33) au pivot, et de taquets (30, 31) opposés de clôture de la rainure.

2. Dispositif selon la revendication 1, **caractérisé en ce que** la virole est approximativement circulaire mais pourvue d'un méplat (40) sur lequel un des taquets est installé.

3. Dispositif selon l'une quelconque des revendications 1 ou 2, **caractérisé en ce que** les cales comprennent une cale de retenue de glissement (34) du pied de la pale (27) dans la rainure (18), et une cale de support (38) du pied de la pale posée sur un fond de la rainure.

4. Dispositif selon la revendication 3, **caractérisé en ce que** la cale de retenue de glissement est retenue dans des entailles (26) opposées de bords intérieurs de lèvres délimitant la rainure.

5. Dispositif selon la revendication 4, **caractérisé en ce que** la cale de retenue de glissement est constituée d'une pluralité de matériaux, dont l'un au moins d'entre eux a la capacité d'absorber de l'énergie par déformation.

6. Dispositif selon la revendication 5, **caractérisé en ce que** les entailles sont disposées au-delà du fond de la rainure, la cale de retenue (35) est posée sur la cale de support (38), traversée par la cale de support (38), et la cale de support (38) comprend une extrémité en crochet (39) entourant une languette (52) de la cale de retenue et en appui sur un des taquets.

7. Dispositif selon l'une quelconque des revendications 1 à 6, **caractérisé en ce que** les points d'attache au pivot sont des pattes de virole munies d'un perçage de boulonnage, et le pivot comprend des pattes (19, 20) complémentaires, munies de faces d'appui des pattes de virole.

8. Dispositif selon la revendication 7, **caractérisé en ce qu'**il comprend des demi-plates-formes (42, 43) comprenant chacune une portion d'un bord circulaire (46, 47) et un bord d'appui (48, 49) à la pale, ainsi qu'une patte (44, 45) munie d'un perçage de boulonnage et d'une face d'appui sur les pattes complémentaires.

## Claims

1. Variable pitch blade device comprising a blade (27), a pivot (15) in a groove (18) of which a root of the blade is mounted, and means of retaining the root of the blade in the groove, said means comprising shims (34, 38) inserted in the groove and that stop in contact with the blade root, and a shell (28) inserted around the pivot (15), **characterised in that**, the shell (28) is provided with attachment points (32, 33) to the pivot, and facing cleats (30, 31) closing the groove.

2. Device according to claim 1, **characterised in that** the shell is approximately circular in shape and is provided with a flat (40) on which one of the cleats is installed.

3. Device according to claim 1, **characterised in that** the shims include a retaining shim (34) preventing the root of the blade (27) from sliding in the groove (18), and a blade root support shim (38) placed on the bottom of the groove.

4. Device according to claim 3, **characterised in that** the retaining shim for preventing sliding is retained in facing notches (26) formed in the inner edges of the lips delimiting the groove.

5. Device according to claim 4, **characterised in that** the retaining shim preventing sliding is composed of a plurality of materials, and at least one of these materials is capable of absorbing energy by deformation.

6. Device according to claim 5, **characterised in that** notches are arranged beyond the bottom of the groove, the retaining shim (35) is placed on the support shim (38), and the support shim (38) passes through it, and the support shim (38) comprises a hook-shaped end (39) surrounding a tab (52) of the retaining shim and bearing on one of the cleats.

7. Device according to claim 1, **characterised in that** the attachment points to the pivot are shell tabs provided with a drilling for bolts, and the pivot comprises additional tabs (19, 20), provided with faces on which the shell tabs bear.

8. Device according to claim 7, **characterised in that** it comprises half platforms (42, 43) each comprising a portion of a circular edge (46, 47) and a bearing edge (48, 49) bearing in contact with the blade, and a tab (44, 45) provided with drilling for bolts and a face bearing in contact with the additional tabs.

## Patentansprüche

1. Vorrichtung eines Blattes mit variabler Anstellung, umfassend ein Blatt (27), eine Schwenkachse (15), in einer Nut (18) derer ein Fuß des Blattes angebracht ist, und Mittel zum Halten des Fußes des Blattes in der Nut, wobei die Mittel Keile (35, 38) umfassen, die in die Nut eingesteckt sind und an dem Fuß des Blattes anschlagen, sowie einen Ring (28), der um die Schwenkachse (15) gelegt ist, **dadurch gekennzeichnet, dass** der Ring (28) mit Stellen zum Befestigen (32, 33) an der Schwenkachse und mit gegenüberliegenden Nasen (30, 31) zum Abschluss der Nut versehen ist.

2. Vorrichtung nach Anspruch 1, **dadurch gekennzeichnet, dass** der Ring annähernd kreisförmig, aber mit einer Abflachung (40) versehen ist, an der eine der Nasen angebracht ist.

3. Vorrichtung nach einem der Ansprüche 1 oder 2, **dadurch gekennzeichnet, dass** die Keile einen Keil (35) zum Festlegen des Fußes des Blattes (27) gegen ein Gleiten in der Nut (18) sowie einen Keil zum Tragen (38) des Fußes des Blattes, der auf einen Boden der Nut aufgesetzt ist, umfassen.

4. Vorrichtung nach Anspruch 3, **dadurch gekennzeichnet, dass** der Keil zum Festlegen gegen ein Gleiten in gegenüberliegenden Einkerbungen (26) von Innenkanten von die Nut begrenzenden Lippen gehalten ist.

5. Vorrichtung nach Anspruch 4, **dadurch gekennzeichnet, dass** der Keil zum Festlegen gegen ein Gleiten aus einer Vielzahl von Werkstoffen besteht, von denen wenigstens einer die Fähigkeit besitzt, Energie durch Verformung aufzunehmen.

6. Vorrichtung nach Anspruch 5, **dadurch gekennzeichnet, dass** die Einkerbungen jenseits des Bodens der Nut angeordnet sind, der Festlegungskeil (35) auf den Tragkeil (38) aufgesetzt, von dem Tragkeil (38) durchgriffen ist und der Tragkeil (38) ein hakenförmige Ende (39) aufweist, das eine Zunge (52) des Festlegungskeils umgreift und an einer der Nasen in Anlage ist.

7. Vorrichtung nach einem der Ansprüche 1 bis 6, **dadurch gekennzeichnet, dass** die Stellen zum Befestigen an der Schwenkachse Ringlaschen sind, die mit einer Bohrung zur Bolzenverbindung versehen sind, und die Schwenkachse ergänzende Laschen (19, 20) umfasst, die mit Fläche zur Anlage der Ringlaschen versehen sind.

8. Vorrichtung nach Anspruch 7, **dadurch gekennzeichnet, dass** sie Halbplattformen (42, 43) mit jeweils einem Abschnitt eines kreisförmigen Randes (46, 47) und einer Kante zur Anlage (48, 49) an dem Blatt sowie einer Lasche (44, 45), die mit einer Bohrung zur Bolzenverbindung und mit einer Fläche zur Anlage an den ergänzenden Laschen versehen ist, umfasst.
